# DEMANDE DE BREVET EUROPEEN

(11) **EP 0 622 552 A1**
(43) Date de publication de la demande: **02.11.1994**
(21) Numéro de dépôt: 94400870.5
(22) Date de dépôt: 21.04.1994
(51) Int. Cl.: F16B 7/18, F16B 12/30, F16B 12/40, A47C 19/00

(54) **Dispositif d'assemblage des extrémités de deux profilés au moyen d'une vis**

(30) Priorité: 21.04.1993 FR 9304702
(71) Demandeur: Morisset, Dominique, F-87230 Les Cars (FR)
(72) Inventeur: Morisset, Dominique, F-87230 Les Cars (FR)
(74) Mandataire: Polus, Camille

(57) **Abrégé**

Dispositif d'assemblage au moyen d'une vis (38) d'un corps creux sur un support, notamment pour la liaison entre un premier (10) et un second (12) profilés plus particulièrement pour le montage d'un cadre de lit vendu prêt à monter, le premier profilé (10) étant percé, avec un premier (18) et un second (36) trous respectivement à travers les parois supérieure (14) et inférieure (16) de ce premier profilé et le second (12) profilé comprenant un insert (30) solidaire du second profilé, caractérisé en ce qu'il comprend une douille (22) avec un corps (24) prévu pour pénétrer dans le premier trou (18) du premier profilé, ce corps (24) comprenant un trou (28) intérieur longitudinal, coaxial à ce corps, prévu pour le guidage de la vis, le second trou (36) du premier profilé ayant un diamètre inférieur à celui de la tête de la vis.

L'invention a aussi pour objet une variante qui comprend un embout de tube.

## Description

La présente invention a pour objet un dispositif d'assemblage d'un corps creux avec un support avec un guidage de vis, notamment pour la fixation des extrémités de deux profilés destinés à former les éléments d'un cadre de lit du type vendu prêt à monter.

En effet, les produits encombrants tels que des cadres de lit sont de plus en plus vendus prêts à monter et afin de diminuer le volume et faciliter le transport, les cadres sont vendus en éléments séparés qu'il convient d'assembler.

Ces cadres sont constitués de tubes métalliques, généralement de section rectangulaire, et doivent être solidarisés entre eux à l'aide de vis.

Une solution connue consiste à prévoir des perçages à travers les parois supérieure et inférieure du premier profilé et un insert disposé à l'intérieur du second profilé dans lequel viennent se monter des vis dont la tête est au-dessus de la face supérieure de la paroi supérieure du premier profilé.

De tels profilés à section rectangulaire ont un gros moment d'inertie mais sont réalisés à partir de tôles de faible épaisseur et le serrage des vis provoque généralement une déformation de ces profilés, dès le montage.

Si le serrage est suffisant et satisfaisant au moment du montage ou au début de l'utilisation il n'en est pas de même par la suite car la reprise des efforts n'étant pas assurée par le profilé, la vis se desserre et au fur et à mesure de l'utilisation un jeu important apparaît dont les effets sont très préjudiciables à la bonne tenue du cadre de lit.

On sait par ailleurs que le serrage de deux tôles métalliques l'une sur l'autre est très efficace et que l'on peut atteindre des couples de serrage importants qui se prolongent dans le temps, car les matériaux métalliques permettent une excellente reprise des efforts.

Il se pose néanmoins un problème dans le cas des profilés car si l'on doit serrer l'une contre l'autre la face inférieure de la paroi inférieure du premier profilé et la face supérieure de la paroi du second profilé, il faut pouvoir disposer une vis à l'intérieur du premier profilé.

Une solution consiste à introduire la vis par l'extrémité ouverte du profilé, mais l'accès en est très difficile et surtout le passage d'un outil reste délicat, une telle solution ne convient donc pas à des produits vendus prêts à monter pour lesquels les utilisateurs ne sont pas nécessairement doués de compétence mécanique.

Aussi, la présente invention propose un dispositif de guidage de vis qui vient s'adapter sur le premier profilé et qui assure le maintien de la vis et son bon positionnement par rapport au second profilé, sur toute la hauteur intérieure de ce premier profilé.

Ce dispositif permet en outre un bon guidage de l'outil de serrage, il s'agit d'un dispositif simple, peu coûteux, pouvant être adapté dès la fabrication des éléments vendus prêts à monter ou bien mis en place par l'utilisateur lui-même, compte tenu de sa simplicité de positionnement.

A cet effet, le dispositif d'assemblage d'un corps creux sur un support à l'aide d'une vis selon l'invention, notamment pour la liaison entre un premier et un second profilés plus particulièrement pour le montage d'un cadre de lit vendu prêt à monter, ce premier profilé comportant des perçages, chaque perçage ayant un premier et un second trous respectivement à travers les parois supérieure et inférieure, ainsi qu'un insert solidaire du second profilé, se caractérise plus particulièrement en ce qu'il comprend une douille avec un corps prévu pour pénétrer dans le premier trou du premier profilé, cette douille étant d'une longueur inférieure à la hauteur intérieure de ce profilé, le corps comprenant lui-même un trou intérieur longitudinal coaxial à ce corps prévu pour le guidage de la vis et une tête prévue pour coopérer en appui avec la face supérieure de la paroi supérieure de ce profilé.

Selon une autre caractéristique, le second trou du premier profilé a un diamètre inférieur à celui du diamètre du premier trou de ce même profilé, la douille ayant une tête avec un diamètre supérieure à celui du premier trou du premier profilé.

Selon un mode de réalisation particulier de l'invention le trou intérieur a un diamètre correspondant à celui de la tête de la vis de serrage.

Selon un perfectionnement de ce dispositif de guidage, la douille est immobilisée en rotation par rapport au profilé.

Selon une autre caractéristique de l'invention, la douille comprend une rondelle fixée de façon amovible à son extrémité inférieure, le diamètre de cette rondelle étant sensiblement identique au diamètre extérieur du corps de l'embout de façon à passer à travers le premier trou.

Selon un mode de réalisation particulier de l'invention la douille est réalisée en matière plastique.

D'autre part, le second trou du premier profilé est de diamètre inférieur au diamètre du premier trou.

L'invention propose également une variante comprenant un embout de tube plein, à introduire dans le premier tube et muni de trous de guidage des vis

Le dispositif de guidage est maintenant décrit selon un mode de réalisation particulier de l'invention, non limitatif, cette description étant faite en regard des dessins annexés sur lesquels :
- la figure 1 représente une vue en perspective d'une liaison de deux profilés,
- la figure 2 représente une vue en coupe par un plan vertical de la douille de guidage selon l'invention, montée sur un profilé,
- la figure 3 représente une vue isolée de la douille selon l'invention,
- la figure 4 représente une variante de réalisation de la douille selon l'invention avec une rondelle.
- la figure 5 représente une variante de réalisation avec embout, et
- la figure 6 représente une vue en perspective de l'embout.

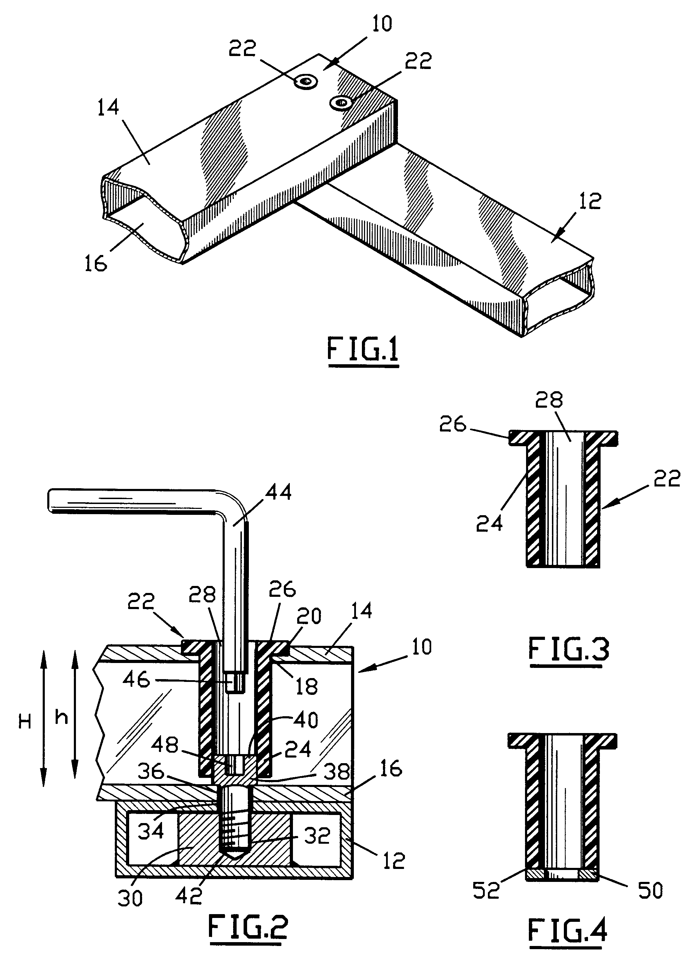

Sur la figure 1 on a représenté un premier profilé 10, et un second profilé 12, liés par leurs extrémités et orientés perpendiculairement l'un à l'autre.

Ainsi que cela est également visible sur la vue en coupe de la figure 2, le premier profilé 10 comprend une paroi supérieure 14 et une paroi inférieure 16, parallèles entre elles, la section de ce profilé étant rectangulaire.

La paroi supérieure 14 comprend un trou 18 avec un suralésage 20. Le diamètre du trou 18 est D.

Chaque trou 18, ménagé à travers la paroi supérieure 14 du premier profilé 10 comprend une douille 22 avec un corps 24 et une tête 26, le diamètre extérieure du corps 24 étant sensiblement égal à D afin de permettre l'introduction de la douille 22 dans ce trou, ainsi que cela est représenté sur la figure 2.

Le diamètre de la tête 26 est sensiblement égal à celui du suralésage 20 de façon à venir s'y encastrer.

Cette douille 22 comprend en outre un trou central 28, coaxial au corps 24 de cette même douille.

La hauteur du corps de douille h est inférieure à la hauteur H séparant le fond du suralésage 20 de la face intérieure de la paroi inférieure 16 du premier profilé.

Le second profilé 12 de section rectangulaire comprend un insert 30 rapporté à l'intérieur et fixé de façon connue, notamment par soudure, cet insert étant muni d'un taraudage 32.

D'autre part, ce second profilé 12 comprend à sa partie supérieure un trou 34 disposé en vis à vis d'un trou 36 ménagé dans la paroi inférieure 16 du premier profilé 10.

Les trous 34 et 36 ont le même diamètre d, inférieur à D et sont disposés de façon coaxiale lorsque les premier et second profilés 10 et 12 sont montés à 90° l'un par rapport à l'autre.

Le dispositif de guidage est prévu pour recevoir une vis 38, dont la tête 40 est d'un diamètre très légèrement inférieur au trou 28 ménagé dans la douille 22 et le corps de vis 42 est prévu pour coopérer avec le taraudage 32 ménagé dans l'insert 30.

La tête de vis prend appui sur la face supérieure de la paroi inférieure du premier profilé.

On a en outre représenté sur cette figure 2 un outil 44 de serrage dont la tête 46 correspond au profil du logement 48 ménagé dans la tête 40 de la vis 38, en l'occurrence une tête multipans, l'outil 44 étant une clé courbée à 90° afin de faciliter le serrage.

Sur la figure 3, on a représenté une vue en coupe isolée de la douille 22 avec la tête 26, le corps 24 et le trou intérieur 28.

La douille 22 peut être immobilisée en rotation par rapport au profilé, par tout moyen adapté tel qu'un crantage notamment, non représenté pour la simplification du dessin.

Sur la figure 4, on a représenté une variante dans laquelle la douille est munie à son extrémité inférieure d'une rondelle 50 qui est fixée temporairement à l'aide par exemple d'un adhésif sur l'extrémité inférieure 52 du corps 24 de la douille 22.

Cette rondelle 50 est du type rondelle frein fendue.

Le fonctionnement du dispositif de guidage selon l'invention est décrit ci-après.

Lorsque l'utilisateur souhaite solidariser les différents éléments du cadre de lit vendu prêt à monter, il positionne à 90° un premier élément 10 et un second élément 12 et il introduit dans l'alésage 18 ménagé dans la paroi supérieure 14 du premier profilé les douilles 22 correspondantes, si ce montage n'a pas été effectué préalablement ou bien directement lors de la fabrication des tubes.

Il introduit ensuite une vis 38 à l'intérieur de chaque douille 22, puis il introduit l'outil 44 de façon à pousser la vis à l'intérieur de la douille, si celle-ci est parfaitement ajustée, puis il met en rotation l'outil 44 jusqu'à provoquer le vissage du corps de vis 42 dans l'insert 30.

Il suffit à l'utilisateur d'ajuster le premier profilé par rapport au second jusqu'à ce que la vis s'introduise dans le premier trou 34 du profilé 12, puis il lui suffit de mettre en rotation la vis pour qu'elle amorce le vissage dans l'insert 30.

Il agit de même avec la seconde vis dans le mode de réalisation représenté afin d'éviter tout pivotement de l'un des profilés par rapport à l'autre. Il effectue un serrage définitif des deux vis pour provoquer une solidarisation parfaite du premier et du second profilé avec une reprise des efforts permettant une excellente tenue du serrage dans le temps.

D'autre part, selon la variante de l'invention représentée sur la figure 4, il est également prévu des inserts munis à l'extrémité inférieure d'un rondelle 50, fixée de façon amovible à l'aide d'un adhésif de faible résistance si bien que dès que l'utilisateur met la vis à l'intérieur de la douille, il provoque également le passage de la vis à travers la rondelle 50 et compte tenu du fait que dans ce cas la douille est également raccourcie, la rondelle se trouve plaquée contre la face supérieure de la paroi inférieure 16 du premier profilé et après serrage complet de la vis, la rondelle frein 50 joue son rôle et évite tout dévissage des vis et donc toute perte d'efficacité de serrage.

Une telle douille est donc très simple d'utilisation et conduit aux avantages énumérés dans le préambule de la description et le fonctionnement décrit met en évidence la simplicité d'utilisation et l'efficacité du résultat.

Le dispositif d'assemblage qui vient d'être décrit, bien qu'appliqué aux cadres de lit, est parfaitement utilisable pour des applications autres, notamment les meubles à ossature tubulaire ou des étagères.

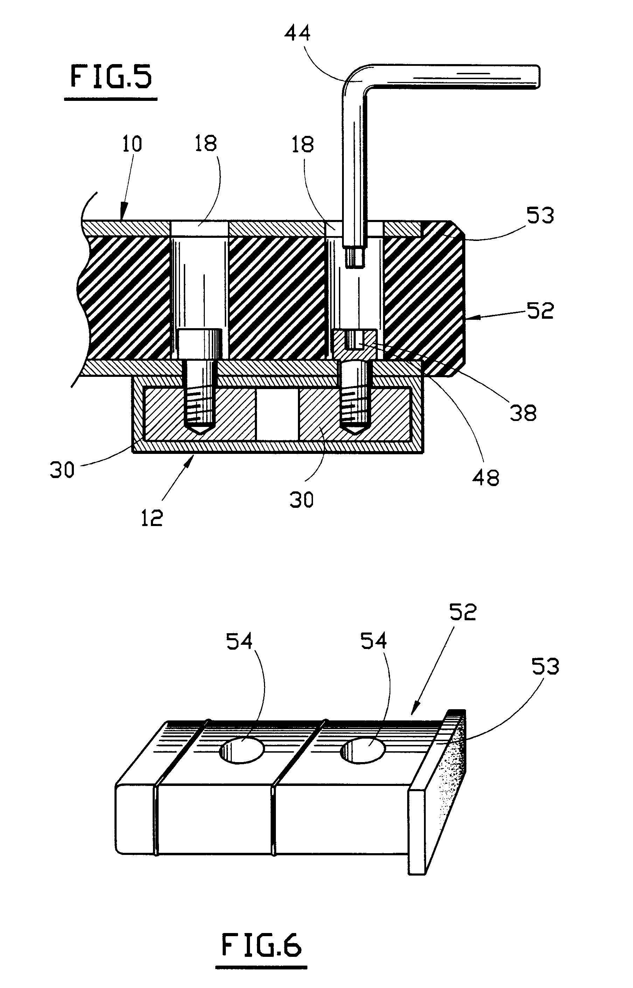

Il en est de même pour la variante représentée sur les figures 5 et 6.

Il s'agit d'un embout de tube (52) qui a des dimensions extérieures lègèrement inférieures aux dimensions intérieures du premier tube (10) de façon qu'il puisse être introduit dans ce tube.

Il comprend deux trous (54) pour le passage des vis (38).

Une lèvre (53) vient en référence avec l'extrémité du tube, si bien que les trous (54) sont, après emboîtement, au droit des trous (18) du premier profilé (10).

Un tel embout, réalisé de façon préférentielle à partir d'un matériau polymère assure un guidage, comme le corps de la douille précédemment décrite, ce qui aide l'utilisateur durant le montage.

Le prix de revient d'un tel embout est très peu élevé et le surcoût par rapport aux embouts simples, de type connu est négligeable.

Cette variante présente également un grand intérêt.

## Revendications

1. Dispositif d'assemblage au moyen d'une vis (38) d'un corps creux sur un support, notamment pour la liaison entre un premier (10) et un second (12) profilés plus particulièrement pour le montage d'un cadre de lit vendu prêt à monter, le premier profilé (10) étant percé, avec un premier (18) et un second (36) trous respectivement à travers les parois supérieure (14) et inférieure (16) de ce premier profilé et le second (12) profilé comprenant un insert (30) solidaire du second profilé, caractérisé en ce qu'il comprend un élément de guidage (22), inséré dans le premier profilé (10), cet élément de guidage étant muni d'au moins un trou (28) prévu pour le guidage de la vis, le second trou (36) du premier profilé ayant un diamètre inférieur à celui de la tête de la vis (38).

2. Dispositif d'assemblage, selon la revendication 1, caractérisé en ce que l'élément de guidage est une douille (22) avec un corps (24) prévu pour pénétrer dans le premier trou (18) du premier profilé, ce corps (24) comprenant un trou (28) intérieur longitudinal, coaxial à ce corps, prévu pour le guidage de la vis, le second trou (36) du premier profilé ayant un diamètre inférieur à celui de la tête de la vis.

3. Dispositif d'assemblage selon la revendication 2, caractérisé en ce que la douille a une hauteur h inférieure à la hauteur H intérieure du premier profilé, la douille étant munie d'une tête (26) prévue pour coopérer en appui avec la face supérieure de la paroi supérieure du premier profilé.

4. Dispositif d'assemblage selon la revendication 2 ou 3, caractérisé en ce que le trou (28) intérieur a un diamètre correspondant à celui de la tête (26) de la vis.

5. Dispositif d'assemblage selon l'une quelconque des revendications 2 à 4, caractérisé en ce que la douille (22) est immobilisée en rotation par rapport au profilé.

6. Dispositif d'assemblage selon l'une quelconque des revendications 2 à 5, caractérisé en ce que la douille (22) comprend une rondelle (50) fixée de façon amovible à son extrémité (52) inférieure.

7. Dispositif d'assemblage selon la revendication 6, caractérisé en ce que la rondelle (50) a un diamètre sensiblement identique au diamètre extérieur du corps (24) de la douille.

8. Dispositif d'assemblage selon l'une quelconque des revendications 2 à 7, caractérisé en ce que la douille (22) est réalisée en matière plastique.

9. Dispositif d'assemblage selon la revendication 1, caractérisé en ce que l'élément de guidage est un embout (52) de tube, dont la section correspond à celle du tube (10) de façon à pouvoir y être introduit, cet embout comprenant une lèvre (53) périphérique formant référence en appui sur l'extrémité du tube et au moins un trou (54) prévu pour le guidage de la vis (38).

10. Dispositif d'assemblage selon la revendication 9, caractérisé en ce que l'embout comprend deux trous (54) dont le diamètre correspond à celui de la tête de la vis (38).
